**Europäisches Patentamt**

**European Patent Office**

**Office européen des brevets**

(19)

(11) Veröffentlichungsnummer: **0 191 363**
**B1**

(12) **EUROPÄISCHE PATENTSCHRIFT**

(45) Veröffentlichungstag der Patentschrift:
02.11.88

(51) Int. Cl.⁴: **F 16 K 31/50,** F 16 K 3/36

(21) Anmeldenummer: **86101169.0**

(22) Anmeldetag: **29.01.86**

(54) Einrichtung zum Schmieren eines Spindelgewindes.

(30) Priorität: **11.02.85 DE 3504631**

(43) Veröffentlichungstag der Anmeldung:
**20.08.86 Patentblatt 86/34**

(45) Bekanntmachung des Hinweises auf die Patenterteilung:
**02.11.88 Patentblatt 88/44**

(84) Benannte Vertragsstaaten:
**AT CH DE FR GB IT LI NL**

(56) Entgegenhaltungen:
**DE-A-2 034 337**
**FR-A-749 353**
**US-A-3 226 061**
**US-A-3 429 401**

(73) Patentinhaber: **Siemens Aktiengesellschaft Berlin und München, Wittelsbacherplatz 2, D-8000 München 2 (DE)**

(72) Erfinder: **Zill, Heinrich, Joh.- Gottlieb- Fichte- Weg 10, D-8502 Zirndorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung betrifft eine Einrichtung zum Schmieren des Gewindes einer Spindel, die als Teil einer Armatur in einer Spindelmutter angeordnet und geführt ist, wobei sich in der Spindelmutter oberhalb der Spindel eine Kammer befindet, die von außen durch eine erste Bohrung in der Wand der Spindelmutter zugänglich ist und die durch diese erste Bohrung mit Schmiermittel angefüllt wird.

Eine derartige Einrichtung zum Schmieren eines Gewindes ist aus der US-A-3 226 081 bekannt. Dabei ist oberhalb einer Spindel eine Kammer vorgesehen, die von außen über eine Verbindung mit Schmiermittel zu füllen ist. Von dort gelangt das Schmiermittel infolge der Bewegung der Spindel in eine zweite Kammer. Diese zweite Kammer steht in Verbindung mit einem schmalen ringförmigen Raum zwischen einem beweglichen und einem festen Armaturenteil.

Da dieser ringförmige Raum nur sehr schmal ist, bedarf es für eine vollständige Benetzung der aufeinander gleitenden Oberflächen mehrerer Stellbewegungen der Armatur. Der obere Bereich des ringförmigen Raumes wird besser als der untere Teil mit Schmiermittel versorgt. Unmittelbar nach einem längeren Stillstand, oder falls bei hoher Beanspruchung der Schmierfilm reißt, ist insbesondere im unteren Bereich des ringförmigen Raumes eine unzureichende Versorgung mit Schmiermittel zu erwarten.

Der Erfindung lag die Aufgabe zugrunde, eine Einrichtung zum Schmieren des Gewindes einer Spindel zu entwickeln, die stets eine möglichst gleichmäßige Verteilung von Schmiermittel sowohl im oberen Bereich als auch im unteren Bereich des Ringraumes zwischen der Spindel und der Spindelmutter gewährleistet.

Die Aufgabe wird erfindungsgemäß dadurch gelöst,

daß die Kammer durch ein System von Bohrungen im Körper der Spindel mit einer Mantelfläche der Spindelmutter, die das Gewinde der Spindel führt, verbunden ist, wobei das System von Bohrungen zum Schmieren der Mantelfläche dient,

daß die Kammer nach oben hin durch einen der oberen Stirnfläche der Spindel gegenüberliegenden, beweglich gelagerten und nach unten gegen einen Anschlag an der Spindelmutter gedrückten Kolben begrenzt ist, und

daß sich in der Wand der Spindelmutter eine zweite Bohrung befindet, die durch den Kolben verschlossen und erst nach Auslenkung des Kolbens offen ist, wobei diese zweite Bohrung als Überlauföffnung für überschüssiges Schmiermittel dient.

In eine fertig montierte Armatur wird, wenn sich die Spindel am unteren Anschlagpunkt befindet, durch die erste Bohrung in der Wand der Spindelmutter von außen Schmiermittel eingebracht, bis die Kammer, die sich oberhalb der Spindel befindet, angefüllt ist. Die erste Bohrung wird danach verschlossen. Im Betriebszustand wird dann bei jedem Hub der Spindel Schmiermittel in die erfindungsgemäß im Körper der Spindel angeordneten Bohrungen gepreßt. Durch diese Bohrungen gelangt das Schmiermittel an die zu schmierende Mantelfläche der Spindelmutter.

Hiermit wird der Vorteil erzielt, daß bei jeder Hubbewegung der Armatur der gesamte Ringraum zwischen Spindel und Spindelmutter gleichmäßig mit Schmiermittel versorgt wird. Das Spindelgewinde an der Mantelfläche wird im oberen wie im unteren Teil bei jeder Hubbewegung in gleicher Weise automatisch nachgeschmiert. Mit der erfindungsgemäßen Einrichtung ist selbst nach langen Stillstandszeiten oder bei hohen Beanspruchungen eine gleichmäßige Versorgung des gesamten Ringraumes zwischen Spindel und Spindelmutter mit Schmiermittel stets gewährleistet. Es wird eine stets gute Schmierung der relativ zueinander zu bewegenden Oberflächen sichergestellt.

Die Kammer, in der sich der Schmiermittelvorrat befindet, kann so groß bemessen sein, daß der Vorrat für die voraussichtliche Betriebszeit der Armatur ausreicht.

Einem möglichen Überdruck des Schmiermittels in der Spindelmutter wird dadurch entgegengewirkt, daß die Kammer nach oben hin durch den beweglich gelagerten und nach unten gegen einen Anschlag gedrückten Kolben begrenzt ist. Falls nämlich der Druck des Schmiermittels einen zulässigen Wert übersteigen sollte, wird der Kolben durch die Druckkraft ausgelenkt. Er gibt dann die zuvor verschlossene zweite Bohrung in der Spindelmutter frei. Durch diese zweite Bohrung wird das Schmiermittel solange aus der Spindelmutter herausgedrückt bis dessen Druckkraft auf den Kolben wieder kleiner ist als die nach unten gerichtete Kraft auf den Kolben. Folglich wird der Kolben bis zu seinem Anschlag nach unten bewegt und die als Überlauföffnung dienende zweite Bohrung wird wieder verschlossen.

Hiermit wird vorteilhaft verhindert, daß ein Überdruck des Schmiermittels in der Kammer oberhalb der Spindel die Armatur beschädigt.

Beispielsweise ist nach der Erfindung vorgesehen, daß der Kolben gegen den Anschlag durch eine Druckfeder gedrückt wird. Durch die Wahl dieser Druckfeder läßt sich die Gegenkraft auf die Druckkraft des Schmiermittels weitgehend exakt einstellen. Der Schmiermitteldruck in der Kammer und folglich auch die Zufuhr von Schmiermittel zum Gewinde der Spindel kann also durch die federnde Lagerung des Kolbens mit nur kleinen Abweichungen konstant gehalten werden.

Mit der Erfindung wird insbesondere der Vorteil erzielt, daß die Spindel der Armatur auf lange Zeit hin stets gleichmäßig geschmiert wird, ohne daß die Armatur stillgelegt zu werden braucht.

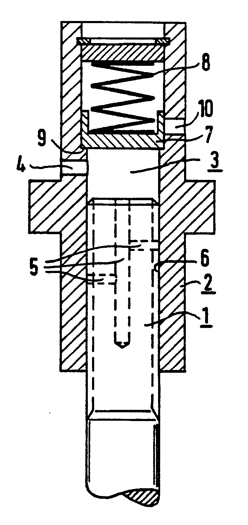

Die Erfindung soll anhand eines in der Zeichnung schematisch wiedergegebenen Ausführungsbeispiels näher erläutert werden:

Die Zeichnung zeigt als Teil einer Armatur eine Einheit aus Spindel und Spindelmutter mit einer Einrichtung zum Schmieren des Spindelgewindes.

Eine Armatur, wie beispielsweise ein Ventil, weist oft eine Spindelmutter 2 auf, in der über ein Gewinde eine Spindel 1 geführt wird. Eine solche Einheit aus Spindel 1 und Spindelmutter 2 ist nach der Zeichnung mit einer Einrichtung zum Schmieren des Spindelgewindes ausgerüstet. Dazu befindet sich in der Spindelmutter 2 oberhalb der Spindel 1 eine Kammer 3, die durch eine verschließbare erste Bohrung 4 von außen zugänglich ist.

In der Spindel 1 befindet sich ein System von Bohrungen 5, das von der Kammer 3 ausgeht und an der zu schmierenden Mantelfläche 6 der Spindelmutter 2 endet. Diese Mantelfläche 6 ist mit dem Gewinde, das die Spindel führt, versehen.

Die Kammer 3 ist außer durch die Spindel 1 und die Spindelmutter 2 durch einen Kolben 7 begrenzt. Dieser Kolben 7 wird durch eine Druckfeder 6 gegen einen Anschlag 9 an der Spindelmutter 2 gedrückt. In dieser Lage verschließt er eine zweite Bohrung 10, die in der Wand der Spindelmutter 2 angeordnet ist.

Nach der Montage der Einheit aus Spindel 1 und Spindelmutter 2 wird die Spindel 1 nach unten bewegt bis sie ihre Endstellung erreicht hat. Danach wird durch die erste Bohrung 4 die Kammer 3 mit Schmiermittel angefüllt und die erste Bohrung 4 verschlossen. Bei jedem Hub der Spindel 1 wird dann Schmiermittel in die Bohrungen 5 gepreßt und wird so gleichmäßig auf die Mantelfläche 6 der Spindelmutter 2 aufgetragen. Der Schmiermittelvorrat der Kammer 3 reicht dabei aus, um das Spindelgewinde über die Mantelfläche 6 ständig nachzuschmieren. Selbstverständlich ist es aber auch leicht möglich, die erste Bohrung 4 zu öffnen und die Kammer 3 mit neuem Schmiermittel zu füllen.

Die Druckfeder 8 des Kolbens 7 ist so ausgelegt, daß bei einem Überdruck des Schmiermittels in der Kammer 3 der Kolben 7 nach oben bewegt und die zweite Bohrung 10 geöffnet wird. Aus dieser zweiten Bohrung 10 kann das überschüssige Schmiermittel ablaufen. Wenn der Schmiermitteldruck einen von der Wahl der Druckfeder 8 abhängenden Grenzwert wieder unterschritten hat, wird der Kolben 7 durch die Druckfeder 8 wieder bis zum Anschlag 9 nach unten bewegt und die zweite Bohrung 10 wieder verschlossen. Der federnd gelagerte Kolben 7 in Verbindung mit der zweiten Bohrung 10 ist also ein Überlastungsschutz für die automatische Schmiereinrichtung.

Liste der Bezugszeichen

1 Spindel

2 Spindelmutter
3 Kammer
4 erste Bohrung in der Spindelmutter
5 Bohrungen im Körper der Spindel
6 Mantelfläche, die das Gewinde der Spindel führt
7 beweglich gelagerter Kolben
8 Druckfeder
9 Anschlag
10 zweite Bohrung in der Spindelmutter

## Patentansprüche

1. Einrichtung zum Schmieren des Gewindes einer Spindel (1), die als Teil einer Armatur in einer Spindelmutter (2) angeordnet und geführt ist, wobei sich in der Spindelmutter (2) oberhalb der Spindel (1) eine Kammer (3) befindet, die von außen durch eine erste Bohrung (4) in der Wand der Spindelmutter (2) zugänglich ist, und die durch diese erste Bohrung (4) mit Schmiermittel angefüllt wird, dadurch gekennzeichnet,

daß die Kammer (3) durch ein System von Bohrungen (5) im Körper der Spindel (1) mit einer Mantelfläche (6) der Spindelmutter (2), die das Gewinde der Spindel (1) führt, verbunden ist, wobei das System von Bohrungen (5) zum Schmieren der Mantelfläche (6) dient,

daß die Kammer (3) nach oben hin durch einen der oberen Stirnfläche der Spindel (1) gegenüberliegenden, beweglich gelagerten und nach unten gegen einen Anschlag (9) an der Spindelmutter (2) gedrückten Kolben (7) begrenzt ist, und

daß sich in der Wand der Spindelmutter (2) eine zweite Bohrung (10) befindet, die durch den Kolben (7) verschlossen und erst nach Auslenkung des Kolbens (7) offen ist, wobei diese zweite Bohrung (10) als Überlauföffnung für überschüssiges Schmiermittel dient.

2. Einrichtung nach Anspruch 1, dadurch gekennzeichnet, daß der Kolben (7) gegen den Anschlag (9) durch eine Druckfeder (8) gedrückt wird.

## Claims

1. Device for greasing the screw thread of a spindle (1), which is arranged and guided as part of an armature in a spindle nut (2), wherein a chamber (3) is located in the spindle nut (2) above the spindle (1), is accessible from outside via a first drill hole (4) in the wall of the spindle nut (2) and is filled up with greasing medium via this first drill hole (4), characterised in that the chamber (3) is connected, via a system of drill holes (5) in the body of the spindle (1), with an outer surface (6) of the spindle nut (2), which guides the screw thread of the spindle (1), wherein the system of drill holes (5) serves to grease the outer surface (6), in that the chamber (3) is delimited from above by a plunger (7) which is located opposite the upper face of the spindle (1), is movably supported and is depressed downwards against a stop (9) on the spindle nut (2), and in that a second drill hole (10), which is closed by the plunger (7) and opened only after deviation of the plunger (7), is located in the wall of the spindle nut (2) and serves as an overflow opening for excess greasing medium.

2. Device according to claim 1, characterised in that the plunger (7) is depressed against the stop (9) by a pressure spring (8).


**Revendications**

1. Dispositif pour lubrifier le filetage d'une broche (1), qui est disposée et guidée, en tant que partie d'un élément de robinetterie, dans un écrou de broche (2), dans lequel se trouve disposée, au-dessus de la broche (1), une chambre (3) qui est accessible de l'extérieur par un premier perçage (4) ménagé dans la paroi de l'écrou de broche (2) et que l'on remplit d'un lubrifiant par ce premier perçage (4), caractérisé par le fait que la chambre (3) est reliée par un système de perçages (5) ménagés dans le corps de la broche (1), à une surface enveloppe (6) de l'écrou de broche (2), qui guide le filetage de la broche (1), le système de perçages (5) servant à lubrifier la surface enveloppe (6), que la chambre (3) est limitée, vers le haut, par un piston (7) situé en vis-à-vis de la face frontale supérieure de la broche (1) et monté de manière à être mobile et repoussé vers le bas contre une butée (9) située sur l'écrou de broche (2), et que dans la paroi de l'écrou de broche (2) se trouve ménagé un second perçage (10), qui est fermé par le piston (7) et n'est ouvert que lors d'un écartement du piston (16), ce second perçage (10) servant d'ouverture de trop-plein pour le lubrifiant en excès.

2. Dispositif suivant la revendication 1, caractérisé par le fait que le piston (7) est repoussé contre la butée (9) par un ressort de pression (8).